# FASCICULE DE BREVET EUROPEEN

(11) **EP 1 888 359 B1**
(45) Date de publication et mention de la délivrance du brevet: **27.08.2008**
(21) Numéro de dépôt: 06709368.2
(22) Date de dépôt: 22.02.2006
(51) Int. Cl.: B60G 21/06, B60G 11/27, B60G 21/073

(54) **SUSPENSION PNEUMATIQUE INTEGRALE POUR VEHICULES AUTOMOBILES**
INTEGRIERTE PNEUMATISCHE AUFHÄNGUNG
INTEGRATED PNEUMATIC SUSPENSION FOR MOTOR VEHICLES

(30) Priorité: 13.05.2005 FR 0504832
(43) Date de publication de la demande: 20.02.2008
(73) Titulaire: Revelart, Jean, 62161 Agnez les Duisans (FR)
(72) Inventeur: Revelart, Jean, 62161 Agnez les Duisans (FR)
(86) Numéro de dépôt international: PCT/FR2006/000408
(87) Numéro de publication internationale: WO 2006/123024

(56) Documents cités:
- EP-A- 0 275 407
- WO-A-01/87649
- DE-U1- 8 902 888
- US-A- 3 119 629
- US-B1- 6 349 952

## Description

La présente invention concerne la suspension, le Confort, la tenue de route, la réduction des bruits de Roulement des véhicules automobiles.

Le document WO 01/87649 A forme l'état de la technique le plus proche selon le préambule de la revendication 1.

Actuellement les suspensions se composent de: quatre ressorts métalliques pour supporter le poids et la charge du véhicule; de quatre amortisseurs hydrauliques afin de freiner les rebonds des ressorts; deux barres stabilisatrices en acier destinées à réduire les inclinaisons latérales dans les virages. Parfois en complément deux ou quatre éléments pneumatiques de renfort.

Il existe également un système à cinq sphères métalliques, hydrauliques et gaz, maintenu sous pression à l'aide d'un compresseur.

Tous ces éléments sont complexes lourds et onéreux; malgré la présence de coupelles et bagues en caoutchouc, ils transmettent en partie les bruits de roulements des pneumatiques et certaines déformations du sol.

La présente invention malgré sa simplicité et sa légèreté, permet d'obtenir un étouffement des bruits de roulement, un grand confort quelque soit l'état du revêtement des routes parcourues; une stabilité constante dans les virages et quelque soit l'emplacement de la charge dans le véhicule.

Cette invention comporte huit éléments pneumatiques souples gonflable à l'air ou à l'azote (coussins, sphères ou soufflets) reliés deux par deux à l'aide d'une tuyauterie souple ou rigide; ces éléments sont reliés en opposition et en diagonale sur les véhicules à quatre roues ou en latérale sur chaque essieu pour certains véhicules. Ce système de liaison pneumatique entre deux éléments exactement opposés permet une interactivité constante par compensation entre tous les éléments pneumatiques du véhicule.

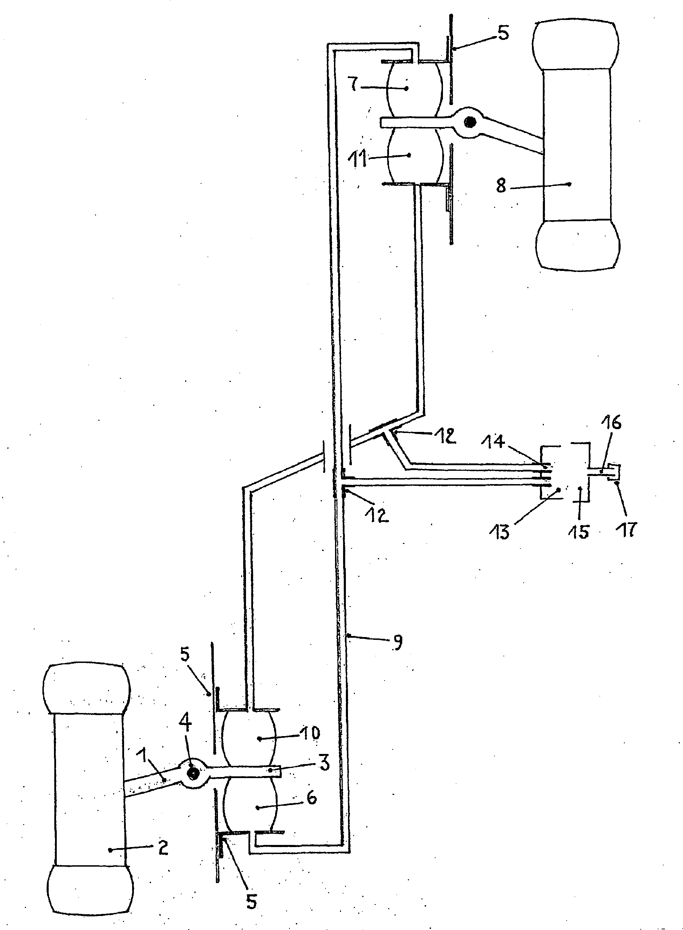

Le dessin annexé illustre l'invention, pour faciliter la compréhension de son fonctionnement, le dessin représente l'implantation des éléments pneumatiques et le tuyau reliant deux roues; entre les deux autres roues du véhicule le système est exactement identique.

Quatre éléments gonflables sont implantés entre le Dessus des bras (1) de support de roue (2) ou sur son prolongement (3) de l'autre coté de son point d'articulation (4) et le châssis ou la coque (5) et quatre entre le dessous de ces bras ou sous leur prolongement et le châssis ou la coque; l'élément inférieur (6) de la roue avant droite (2) est relié à l'élément supérieur (7) de la roue arrière gauche (8) par une tuyauterie (9) permettant la libre circulation de l'air ou de l'azote; l'élément supérieur (10) de la roue avant droite (2) est relié de la même façon à l'élément inférieur (11) de la roue arrière gauche (8).

Même disposition entre la roue avant gauche et la roue arrière droite.

Sur le milieu du parcours de chacune des quatre tuyauteries reliant les éléments deux par deux est intercalé un T (12) de dérivation; chaque T. est relié par une courte tuyauterie à un boîtier de gonflage (13) vers un coté du véhicule, l'extrémité de chaque tube se termine par une valve métallique de gonflage (14). L'extrémité des quatre valves sans bouchons pénètre le fond d'un boîtier cylindrique (13) de faible profondeur, fermé par un couvercle vissable (15) étanche, traversé au centre par une cinquième valve (16) munie celle-ci d'un bouchon à visser (17).

Ce boîtier de gonflage permet de mettre les quatre Circuits indépendants sous une pression rigoureusement Identique et la possibilité de dégonfler les circuits pour Une intervention de mécanique.

En option, un gonfleur électrique commandé du poste de conduite peut compléter l'invention et rendre le système réglable. Pour les système gonflés à l'azote un réservoir de ce gaz est nécessaire.

## Revendications

1. Système de suspension pour véhicules automobiles comprenant quatre éléments pneumatiques souples gonflés à l'air ou à l'azote entre le dessus des bras (1) de support de roue (2) ou le dessus de leur prolongement (3) de l'autre coté de son point d'articulation (4) et le châssis ou la coque (5) **caractérisé par** l'implantation de quatre éléments pneumatiques souples gonflés entre le dessous de ces bras ou le dessous de leur prolongement et le châssis ou la coque.

2. Système selon la revendication 1 **caractérisé par** une tuyauterie (9) reliant chaque élément supérieur (10) à l'élément opposé inférieur (11) en diagonale sur un véhicule à quatre roues ou en latérale essieu par essieu.

3. Système selon la revendication 1 et la revendication 2 **caractérisé par** l'implantation sur le parcours de chaque tuyauterie (9) d'un T (12) permettant le raccordement à un boîtier de gonflage (13).

4. Système selon la revendication 3 **caractérisé en ce que** le fond du boîtier de gonflage cylindrique (13) est traversé par quatre valves (14) dont l'orifice sans bouchons est à l'intérieur de ce boîtier étanche fermé par un couvercle cylindrique vissable (15) traversé par une cinquième valve de gonflage (16) dont l'orifice situé à l'extérieur de ce couvercle est muni d'un bouchon (17).

## Claims

1. System of suspension for motorized vehicles **characterized by** the establishment consisting of four flexible pneumatic element filled in air or in nitrogen between the top of arms (1) of support of wheel (2) or the top of their extension (3) of other one quoted of are place of articulation (4) and the chassis or cockle (5) and four flexible pneumatic elements filled between the underside of these arms or the underside of their extension and the chassis or cockle.

2. System according to claim 1 **characterizing by** a piping (9) linking up every upper element (10) in the lower compared element (11) in diagonal on a vehicle in four wheels or in lateral axle by axle.

3. System according to claim 1 and claim 2 **characterized by** establishement on the course of every piping (9) of one T (12) allowing linking in a case of inflation (13).

4. System according to claim 3 **characterized in** what what the bottom of the case of cylindrical inflation (13) is crossed by four valves (14) the opening of wjch without corks is inside this airtight case close by a cylindrical cover screwable (15) crossed by the fifth valve of inflation (16) which the opening located outside this cover and provided with a cork (17).

## Patentansprüche

1. System aussetzung für kraftwagen, durch die vier geschmeidige pneumatische elemente enthaltende ansiedlung, in der luft oder im stickstoff zwischen der oberseite der arme angeschwollen, charakterisiert (1) unterstützung rades (2) oder der oberseite von ihrer verlängerung (3) von anderer, was markiert ist, sind kein artikulation (4) und chassis oder schale (5) und vier geschmeidige pneumatische zwischen dem unterteil dieser arme angeschwollene elemente oder der unterteil von ihrer verlängerung und chassis oder schale.

2. System nach der forderung 1 charakterisiert von einer rohrleitung (9) einbindende jedes oberelement (10) im unteren gegenübergestellten element (11) in der diagonale auf einem vierräderigen fahrzug oder im seitlichen der achse von achse.

3. System nach der forderung 1 und der forderung 2 von der ansiedlung auf der strecke jeder rohrleitung (9) eines T (12) ermöglichende die verbindung in einem gehäuse aufpumpens (13).

4. System nach der forderung 3 charakterisiert der boden von gehäuse zylindrischen aufpumpens (13) Und von vier Ventilen ( 14 ) überquert, deren Öffnung ohne Korken innerhalb Dieses wasserdichte von einem zylindrischen Deckel geschlossene Gehäuse (15) vissable, von einem fünften Ventil aufpumpens ( 16 ) überquert, ist, von dem die öffnung,außerhalb dieses Deckels gelegen und der mit einem Stau (17 ) ausgestattet ist.
